(19) **Europäisches Patentamt / European Patent Office / Office européen des brevets**

(11) **EP 4 355 581 B1**

(12) **FASCICULE DE BREVET EUROPEEN**

(45) Date de publication et mention de la délivrance du brevet:
**23.04.2025 Bulletin 2025/17**

(21) Numéro de dépôt: **22744239.9**

(22) Date de dépôt: **15.06.2022**

(51) Classification Internationale des Brevets (IPC):
**B41M 3/14** *(2006.01)* **B42D 25/324** *(2014.01)*
**B42D 25/435** *(2014.01)* **B42D 25/328** *(2014.01)*
**B42D 25/351** *(2014.01)* **B42D 25/387** *(2014.01)*
**B42D 25/346** *(2014.01)* **B42D 25/41** *(2014.01)*

(52) Classification Coopérative des Brevets (CPC):
**B41M 3/148; B42D 25/324; B42D 25/328; B42D 25/346; B42D 25/351; B42D 25/387; B42D 25/41; B42D 25/435**

(86) Numéro de dépôt international:
**PCT/FR2022/051154**

(87) Numéro de publication internationale:
**WO 2022/263772 (22.12.2022 Gazette 2022/51)**

(54) **FORMATION D'UNE IMAGE 3D A PARTIR D'UNE STRUCTURE LENTICULAIRE**

ERZEUGUNG EINES 3D-BILDES AUS EINER LINSENFÖRMIGEN STRUKTUR

FORMATION OF A 3D IMAGE FROM A LENTICULAR STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2021 FR 2106339**

(43) Date de publication de la demande:
**24.04.2024 Bulletin 2024/17**

(73) Titulaire: **IDEMIA France**
**92400 Courbevoie (FR)**

(72) Inventeurs:
• **BERTHE, Benoît**
**92400 COURBEVOIE (FR)**

• **VANDROUX, Coralie**
**92400 COURBEVOIE (FR)**
• **MAZZOLINI, Marie**
**92400 COURBEVOIE (FR)**

(74) Mandataire: **Santarelli**
**Tour Trinity**
**1 bis Esplanade de la Défense**
**92035 Paris La Défense Cedex (FR)**

(56) Documents cités:
**WO-A1-00/04360      WO-A1-2016/097608**
**DE-A1- 102017 129 142    DE-U1- 202008 007 564**
**US-A1- 2019 283 482**

## Description

Domaine Technique

L'invention se rapporte à une technique de formation d'images en 3 dimensions (3D) en niveaux de gris ou en couleur, et porte plus particulièrement sur la personnalisation d'un arrangement de pixels visualisables au travers d'un réseau lenticulaire pour former une image 3D.

Technique antérieure

Le marché de l'identité requiert aujourd'hui des documents d'identité (dits aussi documents identitaires) de plus en plus sécurisés. Ces documents doivent être facilement authentifiables et difficiles à contrefaire (si possible infalsifiables). Ce marché concerne des documents très diverses, tels que cartes d'identité, passeports, badges d'accès, permis de conduire etc., qui peuvent se présenter sous différents formats (cartes, livrets...).

Divers types de documents sécurisés comportant des images ont ainsi été développés au cours du temps, notamment pour identifier de manière sécurisée des personnes. Les passeports, cartes d'identité et divers autres documents officiels comportent aujourd'hui généralement des éléments de sécurité qui permettent d'authentifier le document et de limiter les risques de fraudes, falsification ou contrefaçon. Les documents identitaires électroniques comportant une carte à puce, tels que les passeports électroniques par exemple, connaissent ainsi un essor important ces dernières années.

Diverses techniques d'impression ont été développées au fil du temps pour réaliser des impressions en couleur. La réalisation en particulier de documents identitaires tels que ceux précités nécessitent de réaliser des images de façon sécurisée afin de limiter les risques de falsification par des individus malveillants. La fabrication de tels documents, au niveau en particulier de l'image d'identité du porteur, nécessite d'être suffisamment complexe pour rendre difficile la reproduction ou falsification par un individu non autorisé.

Ainsi, une solution connue consiste à imprimer sur un support une matrice de pixels composés de sous-pixels de couleur et de former des niveaux de gris par carbonisation laser dans une couche lasérisable située en regard de la matrice de pixels, de sorte à révéler une image couleur personnalisée qui est difficile à falsifiée ou à reproduire. Des exemples de réalisation de cette technique sont décrits par exemple dans les documents EP 2 580 065 B1 (datant du 6 août 2014) et EP 2 681 053 B1 (datant du 8 avril 2015).

Bien que cette technique connue offre de bons résultats, des améliorations sont encore possibles en termes notamment de la qualité du rendu visuel de l'image ainsi que du niveau de sécurité atteint. A partir de cette technique de formation d'images, il est en effet difficile d'atteindre de hauts niveaux de saturation en couleur. Autrement dit, le gamut de couleur (capacité à reproduire une plage de couleurs) de cette technique connue peut s'avérer limité, ce qui peut poser problème dans certains cas d'usage. Ceci résulte notamment du fait que les sous-pixels de couleur sont formés par une méthode d'impression classique, par impression de type « offset » par exemple, qui ne permet pas de former des lignes de sous-pixels suffisamment rectilignes et continues, ce qui engendre des défauts d'homogénéité lors de l'impression des sous-pixels (interruptions dans les lignes de pixels, contours irréguliers...) et un rendu colorimétrique dégradé.

Les techniques d'impression courantes offrent en outre une précision de positionnement limitée dû à l'imprécision des machines d'impression, ce qui réduit aussi la qualité de l'image finale en raison d'un mauvais positionnement des pixels et sous-pixels les uns par rapport aux autres (problèmes de chevauchement des sous-pixels, désalignements...) ou en raison de la présence d'un intervalle de tolérance dénué d'impression entre les sous-pixels.

Des procédés connus d'imagerie par holographie permettent également de former des images 3D (en 3 dimensions) mais ces techniques sont complexes et n'offrent pas toujours un résultat visuel satisfaisant.

D'autres procédés de production ou de personalisation de documents de sécurité sont décrits dans WO 2016/097608 A1, US 2019/283482 A1 ou DE 20 2008 007564 U1.

Il existe donc aujourd'hui un besoin pour former de façon fiable des images 3D qui sont sécurisées et de bonne qualité, notamment mais pas exclusivement dans des documents tels que des documents identitaires, documents officiels ou autres. Un besoin existe en particulier pour former de telles images, en couleurs ou en niveaux de gris, qui sont difficiles à falsifier ou à reproduire, en mettant en œuvre un procédé de fabrication le plus simple possible. Un bon niveau de sécurité est souhaitable tout en garantissant une bonne qualité de l'image, en termes de résolution. Un besoin existe aussi pour produire des images 3D présentant un bon niveau de luminosité, hautement saturées en couleur.

Exposé de l'invention

Au vue notamment des problèmes et insuffisances mentionnés ci-avant, la présente invention vise en particulier un procédé de formation d'une image 3D, à partir d'une structure lenticulaire comprenant :

- une couche support sur laquelle est formé un arrangement de sous-pixels d'au moins deux couleurs distinctes, chaque sous-pixel présentant une unique couleur parmi lesdites au moins deux couleurs distinctes; et
- un réseau lenticulaire comprenant des lentilles convergentes disposées en regard de l'arrangement de sous-pixels ;

le procédé comprenant :

a) inspection visuelle de la structure lenticulaire, au moyen d'un appareil de prise de vue, ladite inspection visuelle comprenant les étapes suivantes pour chacune parmi M direction d'observation distinctes relativement au réseau lenticulaire, M étant un entier au moins égal à 2 :

a1) positionnement de l'appareil de prise de vue selon la direction d'observation ;

a2) détection de sous-pixels visualisables au travers des lentilles selon ladite direction d'observation ;

b) détermination, à partir de la couleur des sous-pixels détectés en a2) pour chaque direction d'observation, de niveaux de gris à générer pour révéler, à partir de l'arrangement de sous-pixels, M images visualisables au travers du réseau lenticulaire selon respectivement les M directions d'observation ; et
c) personnalisation de l'arrangement de sous-pixels au cours de laquelle les niveaux de gris déterminés en b) sont gravés en regard des sous-pixels dans la couche support par focalisation d'un rayonnement laser au travers du réseau lenticulaire de sorte à révéler, à partir de l'arrangement de sous-pixels combiné aux niveaux de gris, les M images visualisables au travers du réseau lenticulaire selon respectivement les M directions d'observation, lesdites M images formant collectivement l'image 3D.

Selon un mode de réalisation particulier, ledit procédé est mis en œuvre par un système de personnalisation comprenant l'appareil de prise de vue et un dispositif laser disposé dans le train optique de l'appareil de prise de vue, le dispositif laser projetant le rayonnement laser lors de la personnalisation c) selon chaque direction d'observation adoptée par l'appareil de prise de vue lors du positionnement a1).

Selon un mode de réalisation particulier, les niveaux de gris gravés lors de la personnalisation c) forment intrinsèquement avec l'arrangement de sous-pixels un entrelacement de pixels d'image des M images visualisables au travers du réseau lenticulaire en variant la direction d'observation parmi les M directions d'observation.

Selon un mode de réalisation particulier, les M images représentent :

- différentes vues d'un même objet statique, ces différentes vues étant visualisables dans l'espace selon respectivement les directions d'observation adoptées au travers du réseau lenticulaire de sorte à produire un effet 3D ; ou

- différentes vues d'un même objet en mouvement, les différentes vues étant visualisables selon les directions d'observation adoptées au travers du réseau lenticulaire de sorte à produire une animation 3D.

Selon un mode de réalisation particulier, les sous-pixels sont configurés de sorte que leurs couleurs respectives, parmi lesdites au moins deux couleurs distinctes, sont réparties de façon périodique dans l'arrangement de sous-pixels.
Selon un mode de réalisation particulier, l'arrangement de sous-pixels est formé par l'une quelconque des étapes suivantes :

d) impression sur le support ; et
e) formation d'une couche métallique holographique.

Selon un mode de réalisation particulier, les lentilles du réseau lenticulaire sont des lentilles convergentes de type hémisphérique ou asphérique.
Selon un mode de réalisation particulier, l'arrangement de sous-pixels est positionné approximativement dans le plan focal des lentilles du réseau lenticulaire.
Selon un mode de réalisation particulier, lors de l'inspection visuelle a), l'appareil de prise de vue opère un déplacement relatif, angulaire et/ou par translation, pour se positionner en a1) selon chacune des M directions d'observation, de sorte à réaliser la détection a2) pour chaque direction d'observation.
Selon un mode de réalisation particulier, le procédé comprend un enregistrement, dans une mémoire du système de personnalisation, de données d'inspection caractérisant les sous-pixels détectés en a2) au travers du réseau lenticulaire pour chacune des M directions d'observations,
ladite détermination b) étant réalisée à partir des données d'inspection et à partir de données d'image représentatives des M images formant l'image 3D.
Selon un mode de réalisation particulier, lors de la personnalisation, des perforations sont réalisées dans l'arrangement de sous-pixels par ladite focalisation du rayonnement laser de sorte à révéler localement au travers de l'arrangement de sous-pixels des niveaux de gris dans les sous-pixels causés par des régions sous-jacentes de la couche support situées en regard des perforations.
Selon un mode de réalisation particulier, la couche support est opaque au moins dans le spectre d'onde du visible, dans lequel les perforations formées lors de la personnalisation révèlent localement au travers de l'arrangement de sous-pixels des régions sous-jacentes sombres de la couche support situées en regard des perforations, lesdites régions sombres sous-jacentes formant tout ou partie des niveaux de gris en regard des sous-pixels.
Selon un mode de réalisation particulier, la couche support comporte une encre sensible aux ultraviolets de sorte que l'image 3D soit visible lorsque ladite couche support est exposée à des ultraviolets, l'encre révélée au travers des perforations formant tout ou partie des niveaux de gris en regard des sous-pixels.

Selon un mode de réalisation particulier, la couche support est transparente vis-à-vis au moins du spectre d'onde du visible, dans lequel les perforations révèlent localement au travers de l'arrangement de sous-pixels des régions sous-jacentes claires de la couche support situées en regard des perforations lorsqu'une lumière incidente dans le spectre d'onde du visible est projetée au travers de la couche support, les régions sous-jacentes claires formant tout ou partie des niveaux de gris en regard des sous-pixels.

Dans un mode particulier de réalisation, les différentes étapes du procédé d'affichage (ou au moins une partie d'entre elles) sont déterminées par des instructions de programmes d'ordinateurs.

En conséquence, l'invention vise aussi un programme d'ordinateur sur un support d'informations (ou support d'enregistrement), ce programme étant susceptible d'être mis en œuvre dans un système de personnalisation ou plus généralement dans un ordinateur, ce programme comportant des instructions adaptées à la mise en œuvre des étapes d'un procédé de formation tel que défini ci-dessus et tel que décrit ci-après dans des modes de réalisation particuliers.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une mémoire non volatile réinscriptible ou ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

La présente invention vise également un système de personnalisation configuré pour former une image 3D à partir d'une structure lenticulaire telle que déjà définie ci-avant. Plus précisément, l'invention prévoit un système de personnalisation configuré pour mettre en œuvre le procédé de formation de l'invention.

Selon un mode de réalisation particulier, l'invention prévoit un système de personnalisation pour former une image 3D à partir d'une structure lenticulaire comprenant :

- une couche support sur lequel est formé un arrangement d'une pluralité de sous-pixels d'au moins deux couleurs différentes, chaque sous-pixel présentant une unique couleur parmi lesdites au moins deux couleurs distinctes; et
- un réseau lenticulaire comprenant des lentilles convergentes disposées en regard de l'arrangement de sous-pixels;

le système de personnalisation comprenant :

- une unité d'inspection configuré pour réaliser une inspection visuelle de la structure lenticulaire en visualiser l'arrangement de sous-pixels au travers du réseau lenticulaire au moyen d'un appareil de prise de vue, ladite inspection visuelle comprenant les étapes suivantes pour chacune parmi M direction d'observation distinctes relativement au réseau lenticulaire, M étant un entier au moins égal à 2 :

  a1) positionnement de l'appareil de prise de vue selon la direction d'observation ;
  a2) détection de sous-pixels visualisables au travers des lentilles selon ladite direction d'observation ;

- une unité de calcul configurée pour déterminer, à partir de la couleur des sous-pixels détectés en a2) pour chaque direction d'observation, de niveaux de gris à générer pour révéler, à partir de l'arrangement de sous-pixels, M images visualisables au travers du réseau lenticulaire selon respectivement les M directions d'observation ; et
- une unité de personnalisation configurée pour personnaliser l'arrangement de sous-pixels en formant des niveaux de gris en regard des sous-pixels dans la couche support par focalisation d'un rayonnement laser au travers des lentilles de sorte à révéler les M images visualisables au travers du réseau lenticulaire selon respectivement les M directions d'observation, lesdites M images formant collectivement l'image 3D.

A noter que les différents modes de réalisation définis ci-avant (ainsi que ceux décrits ci-après) en relation avec le procédé de formation de l'invention ainsi que les avantages associés s'appliquent de façon analogue au système de personnalisation de l'invention.

Pour chaque étape du procédé d'affichage, le système d'affichage de l'invention peut comprendre un module correspondant configuré pour réaliser ladite étape.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel peut être exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:

[Fig. 1] La figure 1 est une vue en coupe une structure lenticulaire selon une mise en œuvre particulière ;

[Fig. 2] La figure 2 est une vue éclatée représentant schématiquement une structure lenticulaire selon un mode de réalisation particulier de l'invention ;

[Fig. 3] La figure 3 représente schématiquement une image 3D comprenant M images, selon un mode de réalisation particulier de l'invention ;

[Fig. 4] La figure 4 représente schématiquement un système de formation selon un mode de réalisation particulier de l'invention ;

[Fig. 5] La figure 5 représente schématiquement sous forme d'un diagramme les étapes d'un procédé de formation mis en œuvre par un système de personnalisation, selon un mode de réalisation particulier de l'invention ;

[Fig. 6] La figure 6 représente schématiquement une structure lenticulaire à partir de laquelle est réalisée un procédé de formation selon un mode de réalisation particulier de l'invention ;

[Fig. 7] La figure 7 est une vue en perspective représentant schématiquement une étape d'inspection visuelle mise en œuvre par un système de personnalisation selon un mode de réalisation particulier de l'invention ;

[Fig. 8] La figure 8 est une vue en perspective représentant schématiquement une étape de personnalisation mise en œuvre par un système de personnalisation selon un mode de réalisation particulier de l'invention ;

[Fig. 9] La figure 9 est une vue de coupe représentant schématiquement une étape de personnalisation mise en œuvre par un système de personnalisation selon un mode de réalisation particulier de l'invention ; et

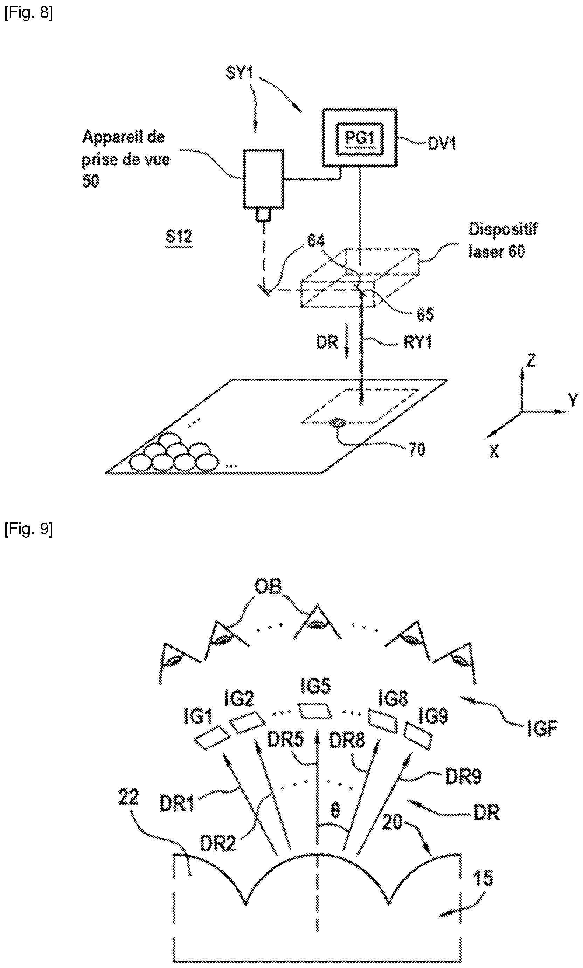

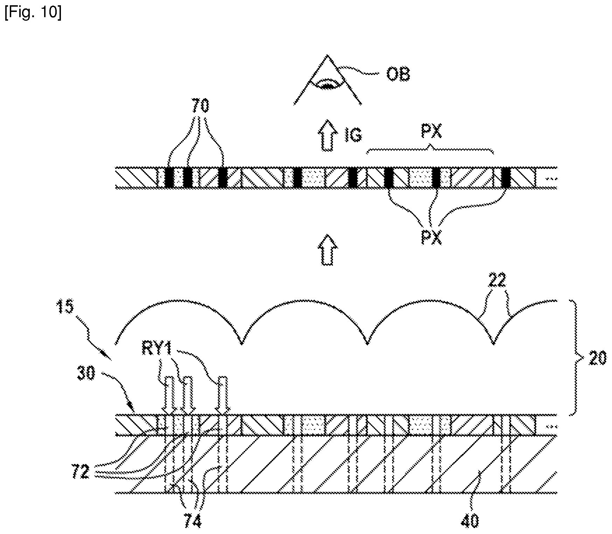

[Fig. 9] La figure 9 représente schématiquement la formation d'une image 3D par la mise en œuvre d'un procédé de formation selon un mode de réalisation particulier de l'invention ; et [Fig. 10] La figure 10 est une vue de coupe représentant schématiquement un exemple de mise en œuvre de l'étape de personnalisation, selon un mode de réalisation particulier de l'invention.

Description des modes de réalisation

Comme indiqué précédemment, l'invention porte de manière générale sur la formation d'images en 3 dimensions (3D) qui peuvent être en couleur ou en niveaux de gris.

De façon bien connue, les niveaux de gris d'une image définissent une valeur entre le blanc et le noir. De manière générale, l'invention peut s'appliquer aussi bien pour former une image en niveaux de gris que pour former une image en couleurs. Dans le présent exposé, les notions de « niveaux de gris » et de « couleurs » peuvent se substituer indifféremment l'une à l'autre, selon que l'on souhaite former une image en niveaux de gris ou en couleurs. La notion de couleur peut donc se comprendre dans ce document comme couvrant également le noir, le blanc et le gris.

Une image 3D au sens de l'invention couvre aussi bien des images 3D statiques que les animations 3D. Une image 3D dite statique est composée d'une pluralité d'images 2D qui représentent différentes vues d'un ou de plusieurs objets statiques selon différentes directions d'observation pour produire une impression de volume ou de relief lorsque l'on observe ces objets suivant différentes directions d'observation. Une animation 3D (ou image 3D dynamique) est formées par une pluralité d'images 2D qui représentent différentes vues d'un ou plusieurs objets dynamiques en mouvement (par exemple une personne qui court ou un oiseau qui bat des ailes), ces images formant ainsi collectivement un effet d'animation 3D lorsqu'un observateur visualise ces images les unes après les autres suivant différentes directions d'observation. Dans le cas d'une animation 3D, une impression de mouvement peut aussi être obtenue en relief.

La présente invention se propose de former une image 3D à partir d'une structure dite « lenticulaire », c'est-à-dire une structure dotée de lentilles. Plus particulièrement, cette structure lenticulaire comprend une couche support sur laquelle est formé un arrangement de sous-pixels d'au moins deux couleurs différentes, chaque sous-pixel présentant une unique couleur parmi lesdites au moins deux couleurs distinctes. La structure lenticulaire comprend en outre un réseau lenticulaire comprenant des lentilles convergentes disposées en regard de l'arrangement de sous-pixels. Des niveaux de gris sont en outre formés par gravure laser dans la couche support en vis-à-vis des sous-pixels de sorte à révéler des images observables selon des directions d'observation distinctes, ces images formant collectivement une image 3D. Cependant, une telle structure lenticulaire implique certaines contraintes de fabrication qui limitent par nature la qualité de l'image 3D ainsi formée.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

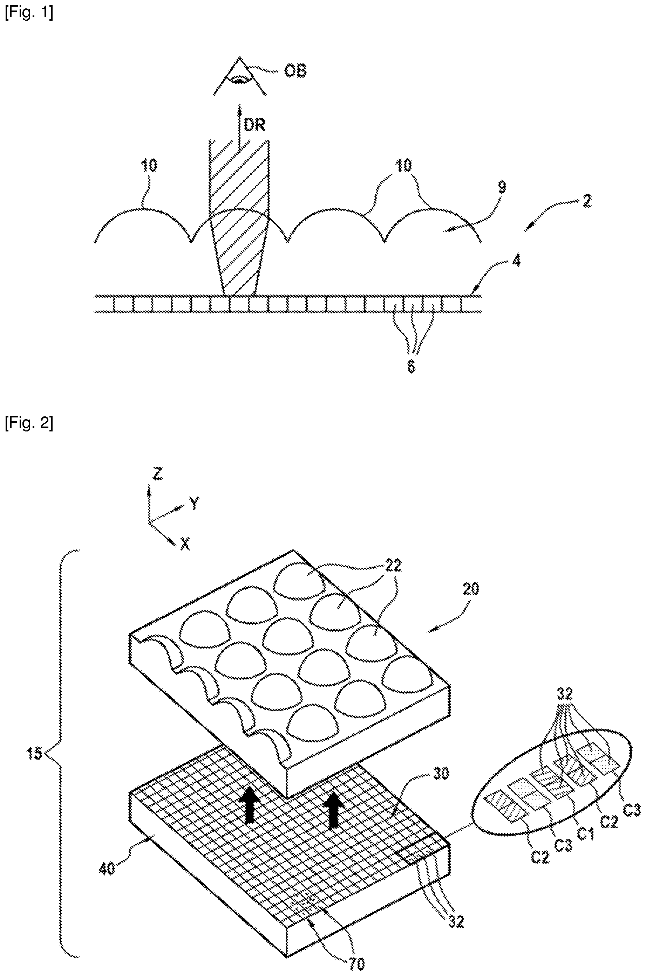

La **figure 1** représente une mise en œuvre particulière d'une structure lenticulaire 2 comprenant un réseau lenticulaire 9 comprenant des lentilles convergentes 10 disposées en regard d'un arrangement 4 de sous-pixels 6 de couleur. En formant des niveaux de gris selon une technique quelconque sous les sous-pixels 6, on peut ainsi révéler M images distinctes visualisables par un observateur OB au travers les lentilles 10 selon respectivement M directions d'observations distinctes (M étant un nombre entier au moins égal à 2).

Un problème réside toutefois en ce qu'il est a priori nécessaire de positionner les sous-pixels 6 en régistration avec les lentilles 9 afin de former une image 3D de bonne qualité par visualisation au travers des lentilles. En effet, si l'on imprime ou forme les sous-pixels 6 de sorte à ce qu'ils représentent un entrelacement de pixels de M images à des positions bien particulières sur une couche support mais que les lentilles 10 ne sont pas positionnées exactement aux positions attendues relativement aux sous-pixels 6, de tels décalages peuvent alors dégrader fortement la qualité de l'image 3D finale visualisable par un observateur OB au travers des lentilles 10. L'alignement ou le positionnement des lentilles 10 par rapport aux sous-pixels peut par conséquent être considéré a priori comment un élément critique pour produire une image 3D de qualité.

Or, une régistration précise des lentilles relativement aux sous-pixels est en pratique difficile à obtenir en raison des aléas ou défauts de positionnement relatif qui sont susceptibles d'exister par nature, ce qui peut dégrader sensiblement la qualité de l'image 3D ainsi formée. Plus l'écran utilisé est grand et plus il est difficile de positionner les sous-pixels en régistration avec des lentilles. Il peut ainsi être difficile de produire de façon fiable des images 3D à partir de ce type de structure lenticulaire. En l'absence de l'invention, des erreurs trop importantes de positionnement relatif entre lentilles et sous-pixels peuvent aboutir à la mise au rebus de toute la structure ou requérir des étapes correctives qui complexifient le processus de fabrication.

L'invention propose donc une technique permettant d'afficher des images 3D de bonne qualité à partir d'un réseau lenticulaire positionné en vis-à-vis d'un un arrangement de sous-pixels formé sur une couche support, et ce tout en s'affranchissant de la contrainte d'une régistration de positionnement précise du réseau lenticulaire vis-à-vis des sous-pixels comme expliqué ci-avant. La formation d'images 3D est rendu plus fiable dans la mesure où une telle régistration n'est plus nécessaire grâce à l'invention, ce qui évite les variations de qualité d'une structure lenticulaire à un autre. Il n'est donc pas nécessaire de corriger un mauvais positionnement des lentilles relativement aux sous-pixels ou encore de mettre au rebus de tels dispositifs d'affichages présentant des désalignements trop importants.

Selon un procédé de formation de l'invention, les décalages ou variations de positionnement entre les sous-pixels et les lentilles sont compensés grâce notamment à une inspection visuelle de la structure lenticulaire visant à détecter les sous-pixels effectivement visualisables au travers des lentilles selon chacune parmi M directions d'observations. A partir de la couleur des sous-pixels ainsi détectés pour chaque direction d'observation, on peut ainsi déterminer les niveaux de gris à générer en regard des sous-pixels pour former les M images composant l'image 3D désirée. Une personnalisation de l'arrangement de sous-pixels par gravure laser est alors réalisée pour former, en regard des sous-pixels, les niveaux de gris précédemment déterminés de sorte à révéler les M images visualisables au travers du réseau lenticulaire selon respectivement les M directions d'observation, ces M images formant collectivement l'image 3D désirée.

L'invention concerne également un système de formation correspondant, ce système de formation étant configuré pour former une image 3D en mettant en œuvre le procédé de formation de l'invention.

D'autres aspects et avantages de la présente invention ressortiront des exemples de réalisation décrits ci-dessous en référence aux dessins mentionnés ci-avant.

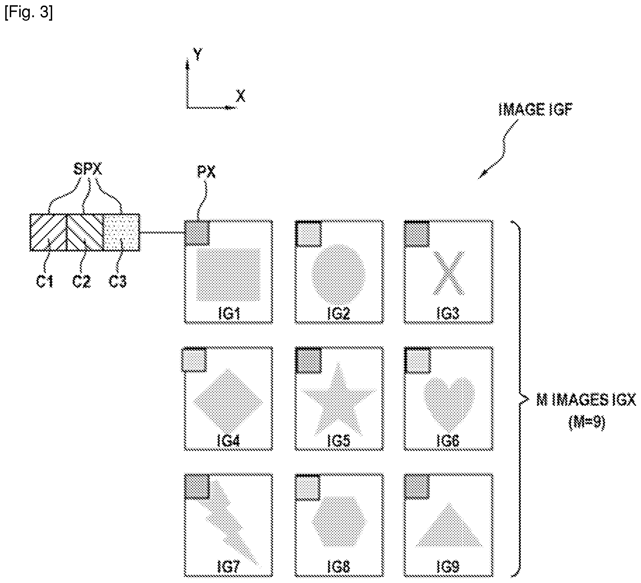

Les **figures 2** et **3** représentent, selon un mode de réalisation particulier, une structure lenticulaire 15 apte à former ou générer une image 3D notée IGF selon le principe de l'invention.

Comme représenté, la structure lenticulaire comprend un arrangement 30 de sous-pixels 32 d'au moins deux couleurs distinctes, chaque sous-pixel 32 présentant une unique couleur parmi ces au moins deux couleurs distinctes.

Plus particulièrement, les sous-pixels 32 peuvent être chacun être présenter une unique couleur parmi une base de N couleurs élémentaires distinctes, N étant un entier au moins égal à 2. On suppose dans les exemples qui suivent que N=3, la base de couleurs élémentaires étant ainsi composée de 3 couleurs élémentaires notées C1, C2 et C3. On considère à titre d'exemple que la base de couleurs élémentaires utilisée ici est la base rouge-vert-bleu (RVB), bien que d'autres bases de couleurs soient aussi possibles. Selon un autre exemple, on peut utiliser une base quadrichromique de couleurs élémentaires (N=4), par exemple la base cyan-magenta-jaune-noir.

Selon un autre exemple, le nombre N peut être fixé à N=2, où les couleurs élémentaires sont le blanc et le noir. En adaptant les niveaux de gris comme décrit ci-après, on peut former des images 3D en niveaux de gris.

Les sous-pixels 32 peuvent être formés de diverses manières sur la couche support 40 (par impression par exemple), la nature de ces sous-pixels 32 étant fonction de la technique de formation adoptée, comme décrit ultérieurement dans des exemples particuliers. Ces sous-pixels 32 formés physiquement sur la couche support 40 se caractérisent chacun notamment par une couleur et une luminosité donnée.

Les sous-pixels 32 peuvent ainsi être formés par impression, par exemple par une technique d'impression de type offset. Le recours à une technique d'impression permet de former les sous-pixels en limitant la complexité du procédé de fabrication de la structure lenticulaire 15.

Selon un autre exemple, l'arrangement 30 de sous-pixels 32 est formé par effet holographique dans une couche métallique holographique (non représentée) disposée sur la couche support 40. Cette couche métallique holographique comprend une structure holographique qui produit l'arrangement 30 de sous-pixels 32 sous la forme d'un hologramme par diffraction, réfraction et/ou réflexion d'une lumière incidente. En particulier, une telle couche métallique holographique peut comprendre des nanostructures diffractives disposées de façon périodique de sorte à former une structure holographique diffractive qui représente l'arrangement 30 de sous-pixels 32.

Le recours à la technique holographique permet notamment d'obtenir des images 3D lumineuses, hautement saturées en couleur, et avec une bonne maîtrise du positionnement des sous-pixels 32 ce qui permet de produire des images 3D de bonne qualité. Le principe de l'hologramme est bien connu de l'homme du métier. Certains éléments sont rappelés ci-après pour référence. Des exemples de réalisation de structures holographiques sont décrits par exemple dans le document EP 2 567 270 B1.

A titre d'exemple, une telle couche métallique holographique comporte une structure en relief (contenant une information tridimensionnelle) formant des portions saillantes (appelés aussi « monts ») séparés par des renfoncements (appelés aussi « vallées »). La couche métallique holographique comprend en outre une couche métallique dite « couche à haut indice de réfraction » recouvrant les reliefs, cette couche métallique présentant un indice de réfraction n2 supérieur à l'indice de réfraction n1 des reliefs. Ces reliefs forment en combinaison avec la couche à haut indice de réfraction une structure holographique qui produit un hologramme (un effet holographique). Les reliefs de la structure holographique peuvent être formés par exemple par embossage d'une couche de vernis d'estampage de façon connue pour la réalisation de structures diffringentes. La surface estampée des reliefs présente ainsi une forme de réseau périodique dont la profondeur et la période peuvent être respectivement de l'ordre de la centaine à quelques centaines de nanomètres par l'exemple. Cette surface estampée est revêtue de la couche métallique à haut indice de réfraction, au moyen par exemple d'un dépôt sous vide d'un matériau métallique (aluminium, argent, cuivre, sulfure de zinc, oxyde de Titane...).

Par ailleurs, les sous-pixels 32 peuvent être agencés de diverses manières dans l'arrangement 30 formé sur la couche support 40 (**figure 2**). Les sous-pixels 32 sont de préférence répartis uniformément à la surface de la couche support 40, bien que d'autres mises en œuvre soient possibles. Les sous-pixels 32 peuvent par exemple former des lignes parallèles de sous-pixels, former une matrice orthogonale, ou encore former un réseau en forme d'hexagones (de type Bayer), d'autres exemples de pavage de sous-pixels étant possibles (sous-pixels triangulaires, etc.).

Comme représenté en **figure 2,** la structure lenticulaire 15 comprend également un réseau lenticulaire 20 comportant des lentilles convergentes 22 disposées en regard (en face) des sous-pixels 32. Ces lentilles 22 sont disposées de sorte à faire converger (à focaliser) la lumière incidente sur l'écran, ou autrement dit de sorte à faire diverger vers l'extérieur de la structure lenticulaire 15 les couleurs des sous-pixels 32 au travers du réseau lenticulaire 20. A noter que l'arrangement 30 de sous-pixels 32 est positionné de préférence dans (ou approximativement dans) le plan focal des lentilles 22 du réseau lenticulaire 20 afin de produire une image 3D de bonne qualité. Toutefois, grâce notamment au procédé de formation de l'invention comme décrit ci-après, il est possible de ne pas placer les sous-pixels 32 exactement dans le voisinage du plan focal des lentilles 22, tout en garantissant malgré tout la formation d'une image 3D de bonne résolution.

Les lentilles 22 du réseau lenticulaire 20 peuvent être des lentilles convergentes de type hémisphérique ou asphérique par exemple.

Comme décrit par la suite, un procédé de formation selon un mode un mode réalisation particulier de l'invention peut être mis en œuvre à partir de la structure lenticulaire 15 représentée en **figure 2** pour former une image 3D notée IGF (dite aussi image 3D finale) telle représentée en **figure 3**. Pour ce faire, le procédé de formation prévoit notamment la formation de niveaux de niveaux de gris 70 par gravure laser dans la couche support 40 en regard (en-dessous dans cet exemple) des sous-pixels 32. La formation de ces niveaux de gris 70 permet de personnaliser l'arrangement 30 de sous-pixels 32 de sorte à révéler, à partir de l'arrangement 30 combiné aux niveaux de gris 70, M images IGX visualisables au travers du réseau lenticulaire 20 selon respectivement M direction d'observations distinctes. Ces M images 2D forment ainsi collectivement l'image 3D visualisable par un observateur OB en faisant varier sa direction d'observation relativement au réseau lenticulaire 20 (et plus généralement par rapport à la structure lenticulaire 15 dans son ensemble).

Comme illustré par la suite, comme décrit plus en détail ultérieurement, la personnalisation susmentionnée implique une gravure réalisée au moyen d'un rayonnement laser focalisé au travers du réseau lenticulaire sur l'arrangement 30 de sous-pixels. Cette gravure laser forme des perforations (ou trous) dans les sous-pixels 32, ces perforations révélant localement au travers de l'arrangement 30 de sous-pixels des niveaux de gris 70 causés par des régions sous-jacentes de la couche support situées en regard de ces perforations.

Comme illustré en **figure 3**, on suppose dans les exemples qui suivent que le procédé de formation permet de former, à partir de la structure lenticulaire 15, une image 3D finale IGF composée de 9 images IG1-G9 notées collectivement IGX (avec M=9). Chacune de ces images IGX est une image 2D qui peut être visualisée au travers des lentilles 22 selon une direction respective DR distincte parmi les directions d'observation DR1-DR9. Autrement dit, chaque image IGX est associée à une direction d'observation (ou orientation d'observation) DR correspondante selon laquelle ladite image est visualisable par un observateur OB au travers des lentilles 22. Ainsi, en changeant de point de vue relativement à la structure lenticulaire 15, l'observateur OB peut visualiser l'image 3D IGF formée par les images IG1-IG9 par effet de focalisation (ou convergence) au travers des lentilles 22. D'autres exemples sont bien entendu possibles, l'homme du métier pouvant notamment adapter selon les besoins le nombre M ainsi que la configuration des images IGX formant l'image 3D finale.

Chaque direction d'observation DR peut être caractérisée par deux angles $(\theta, \varphi)$ respectif par rapport à la normale aux lentilles 22.

Comme représenté en **figure 3**, on considère dans cet exemple que chaque image IGX comprend une pluralité de pixels d'image PX, chaque pixel d'image PX comprenant des sous-pixels d'image SPX présentant une couleur distincte dans ledit pixel. A titre d'exemple, on suppose que chaque pixel d'image PX est formé de 3 sous-pixels d'image SPX présentant respectivement les couleurs élémentaires C1, C2 et C3 (selon des intensités qui varient). On comprend toutefois que le nombre de sous-pixels d'image SPX par pixel d'image PX, ainsi que l'agencement des sous-pixels d'image SPX et pixels d'image PX peuvent être adaptés selon le cas.

A noter que l'arrangement 30 de sous-pixels formé sur la couche support 40 est en soi vierge (indépendamment des niveaux de gris 70), dans le sens où les sous-pixels 32 ne comportent pas intrinsèquement l'information définissant le motif des images IGX que l'on souhaite former. C'est en combinant cet arrangement 30 de sous-pixels 32 avec les niveaux de gris 70 que l'on révèle un entrelacement des pixels d'image PX des M images GX composant l'image 3D finale IGF. C'est entrelacement visualisé au travers du réseau lenticulaire 20 forme alors l'image 3D finale IGF.

Selon un exemple particulier, les sous-pixels 32 sont configurés de sorte que leurs couleurs élémentaires C1, C2 et C3 sont réparties de façon périodique dans l'arrangement 30 de sous-pixels (un même motif de couleur - ici « C1-C2-C3 » - se répète périodiquement).

Selon un exemple particulier, l'arrangement 30 de sous-pixels 32 est configuré pour qu'il y ait homogénéité des sous-pixels 32 dans les N couleurs (il y a autant de sous-pixels 32 dans chacune des N couleurs). L'arrangement 30 peut également être configuré de sorte que, en tout point de celui-ci, un sous-pixel 32 de chaque couleur parmi les N couleurs est disposée à une distance inférieure ou égale à une distance prédéterminée d qui est choisie en fonction du pouvoir séparateur de l'œil humain. La distance d correspond à la distance maximale pour que l'œil humain ne puisse pas distinguer individuellement chaque sous-pixel. Il est ainsi possible de former des images 3D de bonne qualité.

On considère que le pouvoir séparateur de l'œil humain est défini par 1 minute d'angle (1'), soit $3.10^{-4}$ radians ou 0,017 degrés. La distance d est de préférence fixée de sorte que la distance D séparant l'œil d'un observateur du réseau lenticulaire 20 soit au moins égale à la distance correspondant au pouvoir séparateur de l'œil humain. Ainsi, l'observateur ne peut plus distinguer les sous-pixels de couleur les uns des autres, et il est possible de visualiser la couleur correspondant à la synthèse additive des différents sous-pixels.

En pratique, pour que l'œil humain ne distingue pas individuellement les sous-pixels et que la synthèse additive des couleurs des sous-pixels puisse opérer, il convient par exemple que la taille d'un pixel complet contenant 3 sous pixels soit contenue dans un cône d'environ 1 minute d'angle (1'). Pour cela, il faut aussi tenir compte du pouvoir de grandissement des lentilles 22 qui peut être adapté selon le cas. Dans cet exemple, c'est donc chaque groupe de 3 sous-pixels grandit par une lentille 22 qui doit être contenu dans le cône de 1 minute d'angle. Par exemple, pour une observation à une distance D=0,5 mètre du réseau lenticulaire 20, on peut par exemple configurer la structure lenticulaire 15 pour qu'elle respecte l'expression suivante :

$$[\text{Math. 1}] \qquad \frac{d'/2}{D} < \tan 1'$$

soit d' < 291 µm, où d' est la taille de chaque sous-pixel 32 dit « apparente, c'est-à-dire agrandi au travers d'une lentille 22. Par conséquent, les sous-pixels apparents (tels qu'ils apparaissent agrandis au travers des lentilles) doivent être chacun d'une taille (côté) inférieure à 97 µm. Selon un autre exemple où D = 0,3 mètre, les sous-pixels apparents doivent être inférieurs à 58 µm.

Diverses variantes sont toutefois possibles en termes notamment d'agencement et de forme des sous-pixels 30 formés sur la couche support 40, ainsi que de leur couleur et luminosité intrinsèque.

Comme décrit par la suite, une détermination précise des niveaux de gris à former dans la couche support 40 en regard de chaque sous-pixel 32 de l'arrangement 30 est nécessaire pour prendre en compte les aléas ou erreurs de positionnement relatif des lentilles 22 par rapport aux sous-pixels 32.

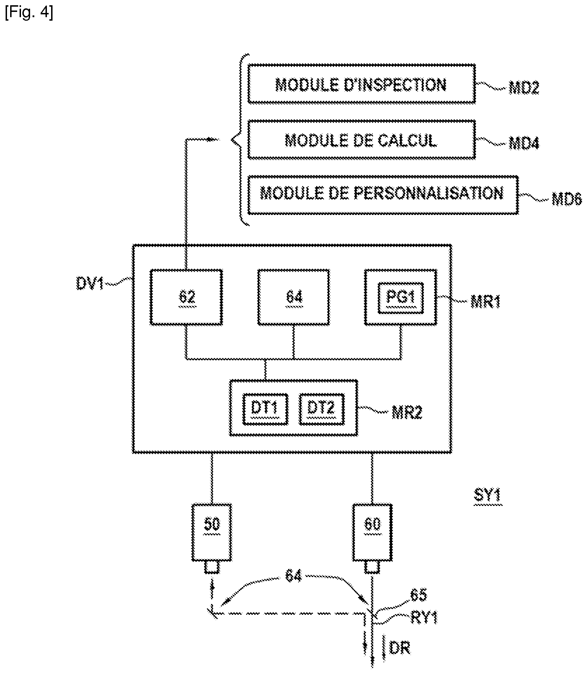

La **figure 4** représente, selon un exemple particulier, un système de formation SY1 configuré pour former une image 3D à partir d'une structure lenticulaire 15 précédemment décrite, en mettant en œuvre le procédé de formation de l'invention.

Plus particulièrement, le système de formation SY1 comprend une unité de contrôle DV1, un appareil de prise de vue 50 et un dispositif laser 60.

L'appareil de prise de vue 50 est configuré, sous le contrôle de l'unité de contrôle DV1, pour réaliser une inspection visuelle (ou observation visuelle) de la structure lenticulaire 15 préalablement à la formation de niveaux de gris. Cet appareil de prise de vue 50 permet de visualiser les sous-pixels 32 au travers des lentilles 22 selon les différentes directions d'observations DR1-DR9. L'unité de contrôle DV1 est capable d'utiliser l'appareil de prise de vue 50 pour détecter des sous-pixels visualisables au travers du réseau lenticulaire 20 pour chacune des M directions d'observations DR1-DR9. A cet effet, l'appareil de prise de vue 50 peut comprendre une ou des caméras, ou tout autre équipement approprié pour permettre une telle inspections visuelle (un ou des capteurs CCD par exemple).

Le dispositif laser 60 est configuré pour projeter un rayonnement laser RY1 au travers du réseau lenticulaire 20 sur l'arrangement 30 de sous-pixels 32 sous le contrôle de l'unité de contrôle DV1. Comme décrit par la suite, ce rayonnement laser RY1 permet de réaliser des perforations dans l'arrangement 30 de sous-pixels 32 de sorte à révéler des niveaux de gris, en regard des sous-pixels 32, causés par des régions sous-jacentes de la couche support 40 de la structure lenticulaire 15 (**figure 2**). Pour ce faire, le dispositif laser 60 est capable de projeter le rayonnement laser RY1 au travers du réseau lenticulaire 20 selon chacune des directions d'observation DR.

Selon un exemple particulier représenté en **figure 4,** le dispositif laser 60 est disposé dans le train optique de l'appareil de prise de vue 50, ce qui permet au dispositif laser 60 de projeter le rayonnement laser RY1 exactement dans la même direction (ou orientation) que la direction de l'appareil de prise de vue 50 relativement à la structure lenticulaire 15. Pour ce faire, le système de personnalisation SY1 comprend par exemple un ensemble 64 de miroirs, dont un miroir 65 semi-transparent disposé en face du dispositif laser 60 et orienté de sorte à transmettre par réflexion vers l'appareil de prise de vue 50 au moins une partie de la lumière provenant de la structure lenticulaire 15. Cette configuration particulière de l'appareil de prise de vue 50 et du dispositif laser 60 permet d'assurer une bonne précision de positionnement lors de la personnalisation par gravure laser de l'arrangement 30 de sous-pixels 32.

Le système de formation SY1 peut par exemple comprendre un mécanisme configuré pour faire varier simultanément la position relative d'un ensemble comprenant l'appareil de prise de vue 50 et le dispositif laser 60 par rapport à la structure lenticulaire 15. Cet ensemble permet notamment d'orienter l'appareil de prise de vue 50 et le dispositif laser RY1 selon chacune des directions d'observation DR que doit adopter l'œil d'un observateur OB pour observer les M images IGX une fois le procédé de formation achevé.

L'unité centrale DV1 comprend dans cet exemple un processeur (ou contrôleur) 62, une mémoire volatile 64 (RAM), une mémoire non volatile MR1, une mémoire non volatile réinscriptible MR2.

La mémoire MR1 est une mémoire non volatile réinscriptible ou une mémoire morte (ROM), cette mémoire constituant un support d'enregistrement (ou support d'informations) conforme à un mode de réalisation particulier, lisible par l'unité de contrôle DV1, et sur lequel est enregistré un premier programme d'ordinateur PG1 conforme à un mode de réalisation particulier. Ce programme d'ordinateur PG1 comporte des instructions pour l'exécution des étapes d'un procédé de formation selon un mode de réalisation particulier, comme décrit ultérieurement.

La mémoire non volatile réinscriptible MR2 est apte à enregistrer le cas échéant des données d'inspection DT1 et des données d'image DT2. Les données d'inspection DT1 peuvent être générées par l'unité de contrôle DV1 lors d'une inspection visuelle de la structure lenticulaire 15, ces données d'inspection caractérisant des sous-pixels 32 détectés au moyen de l'appareil de prise de vue 50 au travers du réseau lenticulaire 20 selon les différentes directions d'observation DR. Les données d'image DT2 sont représentatives des M images IGX formant l'image 3D finale IGF que l'on souhaite former à partir du réseau lenticulaire 15. La nature et les fonctions des données DT1 et DT2 seront décrites plus en détail ultérieurement.

La manière dont les données d'image DT2 sont obtenues peut varier selon le cas, celles-ci pouvant en particulier être reçues depuis l'extérieur, ou préenregistrées dans la mémoire MR2 de l'unité de contrôle DV1.

Le processeur 62 utilise la mémoire volatile 62 pour réaliser les différentes opérations et fonctions nécessaires au fonctionnement de l'unité de contrôle DV1, y compris pour exécuter le programme d'ordinateur PG1 lors de la mise en œuvre du procédé de formation de l'invention. L'unité de contrôle DV1 pilote en particulier l'appareil de prise de vue 50 et le dispositif laser 60 pour réaliser le procédé de formation de l'invention.

Comme représenté en **figure 4** selon un exemple particulier, le processeur 62 piloté par le programme d'ordinateur PG1 met ici en œuvre un certain nombre de modules, à savoir : un module d'inspection MD2, un module de calcul MD4 et un module de contrôle MD6.

Plus précisément, le module d'inspection MD2 est configuré pour réaliser une inspection visuelle de la structure lenticulaire 15 (**figure 2**) en visualisant l'arrangement 30 de sous-pixels 32 au travers du réseau lenticulaire 20 au moyen de l'appareil de prise de vue 50, ladite inspection visuelle comprenant les étapes suivantes pour chacune parmi les M direction d'observation DR distinctes relativement au réseau lenticulaire 20 (M étant un entier au moins égal à 2) :

a1) positionnement de l'appareil de prise de vue selon la direction d'observation DR ;

a2) détection de sous-pixels 32 visualisables au travers des lentilles 22 selon ladite direction d'observation DR ;

L'unité de calcul MD4 est configurée pour déterminer, à partir de la couleur des sous-pixels détectés lors de l'inspection visuelle pour chaque direction d'observation DR, des niveaux de gris 70 à générer pour révéler, à partir de l'arrangement 30 de sous-pixels 32, les M images IGX visualisables au travers du réseau lenticulaire 20 selon respectivement les M directions d'observation DR.

L'unité de personnalisation MD6 est configurée pour personnaliser l'arrangement 30 de sous-pixels 32 en formant des niveaux de gris 70 en regard des sous-pixels dans la couche support 40 par focalisation du rayonnement laser RY1 au travers des lentilles 22 de sorte à révéler les M images IG1-IGX9 visualisables au travers du réseau lenticulaire 20 selon respectivement les M directions d'observation DR1-DR9, lesdites M images IG1-IGX9 formant collectivement l'image 3D IGF.

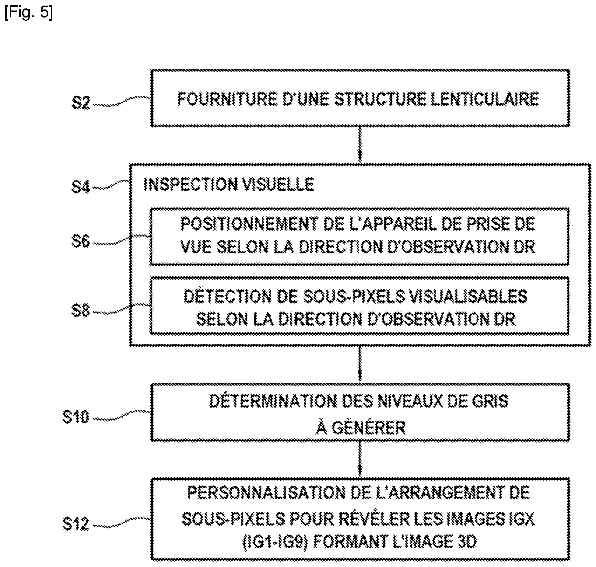

La configuration et le fonctionnement des modules MD2-MD6 de l'unité de contrôle DV1 apparaîtront plus précisément dans les exemples de réalisation décrits ci-après en référence aux **figures 5-10.**

Le système de formation SY1 décrit ci-avant en référence à la **figure 4**, ainsi que les modules représentés en **figure 5** ne constituent que des exemples de réalisation, d'autres mises en œuvre étant possibles dans le cadre de l'invention. L'homme du métier comprendra en particulier que certains éléments du système de formation SY1 ne sont décrits ici que pour faciliter la compréhension de l'invention, ces éléments n'étant pas nécessaires pour mettre en œuvre l'invention.

En référence aux **figures 5-9,** le procédé de formation de l'invention mis en œuvre par le système de formation SY1 est à présent décrit selon un mode de réalisation particulier. A cet effet, l'unité de contrôle DV1 exécute le programme d'ordinateur PG1.

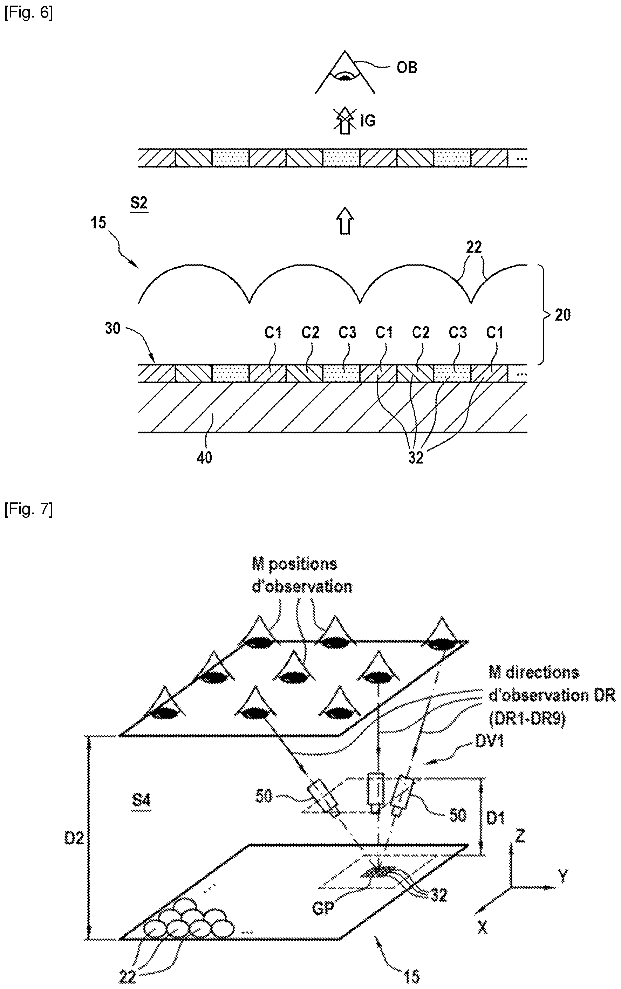

Plus précisément, on suppose que l'on dispose de ou l'on forme (S2, **figure 5**) la structure lenticulaire 15 représentée en **figure 6** et telle que précédemment décrite en référence à la **figure 2**. On considère que cette structure lenticulaire 15 se trouve dans un état initial (vierge) préalable à l'étape de personnalisation à venir. Dans son état initial, la structure lenticulaire 15 est donc dépourvue de niveaux de gris en regard des sous-pixels 32. A ce stade, un observateur OB ne visualise donc au travers du réseau lenticulaire 20 que l'arrangement vierge de sous-pixels 32.

On considère à présent que le système de formation SY1 met en œuvre les étapes S4-S12 (**figure** 5) du procédé de formation de sorte à former, à partir de la structure lenticulaire 15 dans son état initial illustré en **figure 6,** une image 3D finale IGF telle que précédemment décrite en référence à la **figure 3.**

Comme déjà décrit, des décalages ou aléas de positionnement des lentilles 22 relativement aux sous-pixels 32 sont par nature susceptibles de se produire et donc impacter la qualité de l'image 3D finale. Pour pallier ce problème, le procédé de formation comprend notamment une étape S4 d'inspection visuelle et une étape S10 de détermination des niveaux de gris à former pour révéler l'image 3D finale IGF.

Ainsi, au cours d'une étape S4 d'inspection, le système de personnalisation SY1 réalise une inspection visuelle (ou observation visuelle) de la structure lenticulaire 15 au moyen de l'appareil de prise de vue 50. Cette étape S4 d'inspection comprend les étapes S6 et S8 décrites ci-après pour chacune parmi les M directions DR1-DR9 distinctes relativement au réseau lenticulaire 20, M étant un entier au moins égal à 2 (où M=9 en l'espèce). Autrement dit, un processus d'inspection comprenant les étapes S6 et S8 est exécuté pour chacune des directions d'observation DR1-DR9 dans cet exemple. Les différentes itérations S6-S8 peuvent être réalisées simultanément, par groupes de directions d'observation DR ou une direction d'observation DR après l'autre selon le cas, comme décrit ci-après.

Le processus S6-S8 est décrit ci-après, en référence à la **figure 7,** pour l'une des directions d'observation DR et s'applique de la même manière pour chacune des directions d'observation DR. Au cours de l'étape S6 de positionnement, l'appareil de prise de vue 50 est positionné selon la direction d'observation DR considérée (DR1 par exemple). Le système de personnalisation SY1 visualise alors, au moyen de l'appareil de prise de vue 50, l'arrangement de sous-pixels 32 au travers du réseau lenticulaire 20. Au cours d'une étape S8 de détection, le système de personnalisation SY1 détecte alors des sous-pixels 32 - dits sous-pixels utiles - qui sont visualisables (ou visibles) au travers des lentilles 22 selon la direction d'observation DR considérée.

Selon la configuration de la structure lenticulaire 15 et de sa disposition par rapport à l'appareil de prise de vue 50, le système de personnalisation SY1 peut visualiser certains sous-pixels 32 tandis que d'autres ne sont pas visibles (masqués). On suppose ici que le système de personnalisation détecte ainsi un groupe GP de sous-pixels 32 visualisables selon respectivement chacune des M directions d'observation DR. A noter que certains sous-pixels 32 détectés comme visibles par le système de personnalisation SY1 pour une direction d'observation DR peuvent n'être visibles que partiellement, typiquement si seulement une partie de ceux-ci sont visibles au travers de lentilles 22.

Le groupe GP détecté en S8 comprend ainsi les sous-pixels 32 utiles qui sont répartis en face des différentes lentilles 22 lors de la détection S6 pour la direction d'observation DR considérée. Les sous-pixels 32 qui sont masqués ne sont pas inclus dans le groupe GP pour la direction d'observation DR considérée car ils ne sont pas visualisables par l'appareil de prise de vue 50 dans la direction d'observation DR considérée.

Lors de l'inspection visuelle S4, l'appareil de prise de vue 50 peut ainsi opérer un déplacement relatif, angulaire et/ou par translation, par rapport au réseau lenticulaire 20 pour se positionner en S6 selon chacune des M directions d'observation DR, de sorte à réaliser la détection S8 pour chacune des M directions d'observation DR. La position de l'appareil de prise de vue 50 peut par exemple se définir par des coordonnées sphériques $(r, \theta, \varphi)$.

Ce ou ces déplacements relatifs peuvent être réalisés de diverses manières, sous le contrôle de l'unité de contrôle DV1, par exemple en déplaçant l'appareil de prise de vue 50 et/ou la structure lenticulaire 15. Selon un exemple particulier, la structure lenticulaire 15 effectue une rotation de sorte à ce que l'appareil de prise de vue 50 puisse observer les sous-pixels 32 selon chacune des M directions d'observation DR. L'appareil de prise de vue 50 peut également être déplacé en rotation et/ou en translation pour balayer la surface de l'arrangement 30 de sous-pixels 32 selon toutes les directions d'observation DR, de sorte à pouvoir réaliser l'étape S8 de détection qui suit pour chaque direction d'observation DR.

A noter que l'appareil de prise de vue 50 peut éventuellement être capable de visualiser les sous-pixels 32 au travers des lentilles 22 selon simultanément plusieurs directions d'observation DR sans qu'un déplacement soit nécessaire. L'appareil de prise de vue 50 peut alors effectuer les étapes S6 et S8 pour toutes les directions d'observation DR en opérant un nombre de déplacements inférieur au nombre M de directions d'observation DR. Selon un exemple particulier, l'appareil de prise de vue 50 est capable de visualiser l'arrangement 30 de sous-pixels 32 au travers des lentilles 22 suivant simultanément toutes les M directions d'observation DR de sorte qu'aucune déplacement n'est nécessaire, ce qui est possible notamment si la taille de l'arrangement 30 de sous-pixels 32 est suffisamment limitée pour permettre à l'appareil de prise de vue 50 (une caméra par exemple) de couvrir toute la surface dudit arrangement 30.

Pour réaliser les étapes S6-S8, l'appareil de prise de vue 50 peut également comprendre une pluralité de caméras orientées suivant différentes directions de sorte à pouvoir visualiser, sans réaliser de déplacement, les sous-pixels 32 au travers des lentilles 22 selon toutes les directions d'observation DR. Selon un exemple particulier, l'appareil de prise de vue 50 comprend une dalle de M caméras fixes (ou plus) qui visualisent les sous-pixels 32.

On considère dans cet exemple que l'unité de contrôle DV1 détermine au cours de l'inspection visuelle S4 des caractéristiques des sous-pixels 32 utiles qui sont visualisables selon chacune des directions d'observation DR1-DR9. Plus particulièrement, l'unité de contrôle DV1 génère (S8) dans cet exemple des données d'inspection DT1 comprenant les caractéristiques des sous-pixels 32 ainsi détectées. Ces données DT1 caractérisent donc les sous-pixels 32 détectés en S8 au travers du réseau lenticulaire 20 pour chacune des M directions d'observation DR1-DR9. Ces données d'inspection sont par exemple enregistrées dans la mémoire MR2 de l'unité de contrôle DV1 (**figures 4**).

Les caractéristiques comprises dans les données d'inspection DT1 identifient, pour chaque direction d'observation DR, les sous-pixels 32 utiles ainsi que leur couleur respective (parmi C1, C2 et C3 dans cet exemple), éventuellement en association avec d'autres informations telles que la luminosité. Le niveau de luminosité des sous-pixels utiles peut permettre à l'unité de contrôle DV1 de déterminer si un sous-pixel 32 utile est totalement ou partiellement visualisable au travers du réseau lenticulaire 20 pour une direction d'observation DR donnée.

Un sous-pixel 32 est partiellement visualisable si seule une partie de ce sous-pixel est visible au travers d'une lentille 22 pour la direction d'observation DR donnée lors de la détection S8. Un sous-pixel 32 n'est par exemple visualisable que partiellement au travers d'une lentille 22 pour une direction d'observation DR donnée s'il se situe en périphérie du groupe GP de sous-pixels 32 visualisables de sorte qu'une partie seulement de ce sous-pixel périphérique est visible par focalisation au travers de la lentille 32 située en vis-à-vis.

Selon un exemple particulier, les données d'inspection DT1 générées en S8 peuvent notamment être représentatives d'un degré de visibilité des sous-pixels 32 détectés en S8 au travers des lentilles 22 du réseau lenticulaire 20 selon chaque direction d'observation DR. L'unité de contrôle DV1 peut par exemple déterminer qu'un sous-pixel 32 est utile, c'est-à-dire visualisable au travers du réseau lenticulaire 20, pour une direction d'observation DR donnée si sa luminosité est au moins égale à une valeur seuil prédéfinie. Cette valeur seuil prédéfinie peut être adaptée par l'homme du métier et peut notamment être égale à un ratio d'une valeur de luminosité maximale attendue pour les conditions du cas considéré.

Au cours d'une étape S10 de calcul (**figure 5**), l'unité de contrôle DV1 détermine, à partir de la couleur des sous-pixels détectés en S8 pour chaque direction d'observation DR, des niveaux de gris 70 à générer pour révéler, à partir de l'arrangement 30 de sous-pixels 32, les M images IGX (**figure 3**) visualisables au travers du réseau lenticulaire 20 selon respectivement les M directions d'observation DR1-DR9. Pour ce faire, l'unité de contrôle DV1 réalise un calcul permettant de déterminer la configuration (position, taille, etc.) des niveaux de gris 70 à former en fonction des sous-pixels 32 effectivement visualisables pour chaque direction d'observation DR et en fonction des images IGX correspondantes que l'on souhaite former pour chaque directions d'observation DR.

Dans cet exemple, l'unité de contrôle DV1 détermine en S10 les niveaux de gris 70 à partir des données d'inspection DT1 générées lors de l'inspection visuelle S4 et à partir de données d'image DT2 représentatives des M images IGX formant l'image 3D finale IGF que l'on souhaite former. Comme déjà indiqué, l'unité de contrôle DV1 peut obtenir, recevoir ou déterminer ces données d'image DT2 d'une quelconque manière appropriée.

Au cours d'une étape S12 (**figure 5**) de personnalisation illustrée en **figure 8,** le système de personnalisation SY1 réalise une personnalisation de l'arrangement 30 de sous-pixels 32 au cours de laquelle les niveaux de gris 70 déterminés en S10 sont gravés en regard des sous-pixels 32 par focalisation d'un rayonnement laser RY1 au travers du réseau lenticulaire 20 de sorte à révéler, à partir de l'arrangement 30 de sous-pixels 32 combiné aux niveaux de gris 70, les M images IGX (IG1-IG9) visualisables au travers du réseau lenticulaire 20 selon respectivement les M directions d'observation DR (DR1-DR9), ces M images IGX formant collectivement l'image 3D IGF. Pour ce faire, le dispositif laser 60 projette, sous le contrôle de l'unité de contrôle DV1, le rayonnement laser RY1 au travers des lentilles 22 à différentes positions dans l'arrangement 30 de sous-pixels. Des niveaux de gris 70 sont ainsi formés dans l'arrangement 30 de sous-pixels 32 en fonction de l'énergie délivrée par le dispositif laser 60 en chaque point.

Lors de la personnalisation S12, le rayonnement laser RY1 peut être projeté par le dispositif laser 50 depuis une distance D1 par rapport au réseau lenticulaire 20 qui est inférieure à la distance D2 censée séparer l'œil de l'observateur OB du réseau lenticulaire 20 lors l'observateur visualise l'image 3F finale IGF (comme illustré en **figure 7**).

Comme déjà indiqué, l'arrangement 30 de sous-pixels 32 est en soi vierge, dans le sens où les sous-pixels 32 ne comportent pas intrinsèquement l'information définissant le motif des M images IGX1-IGX9 que l'on souhaite former. C'est la combinaison de cet arrangement 30 de sous-pixels avec les niveaux de gris 70 qui révèle un entrelacement des pixels d'image PX des M images IGX composant l'image 3D finale IGF. Comme représenté en **figure 9,** cet entrelacement forme ou génère ainsi les M images IGX visualisables au travers du réseau lenticulaire 20 selon respectivement les M directions d'observation DR1-DR9.

Lors de la personnalisation S12, le rayonnement laser RY est projeté au travers des lentilles 22 selon les M directions d'observation DR afin qu'un observateur OB puisse visualiser au travers des lentilles 22 chacune des images IGX en adoptant la direction d'observation DR correspondante.

Selon un exemple particulier, les M images IGX représentent différentes vues d'un même objet statique, ces différentes vues étant visualisables selon respectivement les directions d'observation DR adoptées au travers du réseau lenticulaire 20 de sorte à produire un effet 3D.

Selon un exemple particulier, les M images IGX représentent différentes vues d'un même objet en mouvement, ces différentes vues étant visualisables selon des directions d'observation DR adoptées au travers du réseau lenticulaire de sorte à produire une animation 3D.

Le système de personnalisation SY1 représenté en **figures 4** et **8** est avantageux en ce que l'appareil de prise de vue 50 est disposé dans le même train optique que le dispositif laser 60 (ce qui revient à considérer que l'appareil de prise de vue 50 visualise le point de l'arrangement 30 de sous-pixels vers lequel pointe au même instant le dispositif laser 60). Ainsi, il est possible de former les niveaux de gris 70 avec une bonne précision de positionnement.

Diverses manières de mettre en œuvre la personnalisation S12 (**figure 5**) de l'arrangement 30 de sous-pixels peuvent être envisagées.

Selon un exemple représenté en **figure 10,** lors de la personnalisation S12, des perforations (ou trous) 72 sont réalisées dans l'arrangement 30 de sous-pixels 32 par focalisation du rayonnement laser RY1 au travers du réseau lenticulaire 20 de sorte à révéler localement, au travers de l'arrangement 30 de sous-pixels, des niveaux de gris 70 dans les sous-pixels 32 causés par des régions sous-jacentes 74 de la couche support 40 situées en regard des perforations 72.

Comme déjà indiqué, le rayonnement laser RY est projeté lors de la personnalisation S12, au travers des lentilles 22 selon les M directions d'observation DR afin d'adapter la position à laquelle le rayonnement laser RY est focalisé sur l'arrangement 30 de sous-pixels 32. On peut ainsi contrôler précisément la position à laquelle les perforations 72 sont réalisées. En particulier, M groupes de perforations 74 peuvent être formés dans l'arrangement 30 de sous-pixels 32 en projetant respectivement le rayonnement laser RY1 selon les M directions d'observation DR. Ces M groupes forment alors les niveaux de gris 70 pour révéler les M images IGX qui sont visualisables selon respectivement les M directions d'observation DR.

Les niveaux de gris 70 formés dans les sous-pixels 32 constituent de façon générale des zones de nuance colorimétrique dont l'aspect peut varier selon la nature, et en particulier la couleur, des régions sous-jacentes 74 de la couche support 40 révélées par les perforations 72. Ainsi, les niveaux de gris 70 peuvent par exemple être sombres si les régions sous-jacentes 74 de la couche support 40 sont opaques ou non-réfléchissantes vis-à-vis au moins du spectre de longueur d'onde du visible.

Selon un exemple, la couche support 40 est opaque (ou non-réfléchissantes) vis-à-vis au moins du spectre de longueur d'onde du visible et les perforations 72 formées lors de la personnalisation S12 au laser révèlent localement au travers de l'arrangement 30 de sous-pixels 32 des régions sous-jacentes 74 sombres de la couche support 40 situées en regard des perforations 72, ces régions sombres sous-jacentes formant alors tout ou partie des niveaux de gris 70 en regard des sous-pixels 32.

Dans le cas où elle est opaque, la couche support 40 absorbe au moins les longueurs d'onde dans le spectre du visible. Il s'agit par exemple d'une couche sombre (de couleur noire par exemple). On considère dans la présente divulgation que le spectre de longueurs de d'onde du visible est approximativement entre 400 et 800 nanomètres (nm), ou plus précisément entre 380 et 780 nm dans le vide.

Selon un exemple particulier, la couche support 40 comprend une surface noire opaque en regard de l'arrangement 30 de sous-pixels 32 et/ou comprend des pigments noirs opacifiants (ou sombres) dans sa masse. La couche support 40 peut comprendre notamment une encre noire, ou encore un matériau teinté dans sa masse pas des pigments noirs ou opacifiants (ou sombres).

Un observateur OB peut ainsi visualiser par réflexion les différentes images IG1-IG9 composant l'image 3D IGF en faisant varier sa direction d'observation parmi les M directions d'observation DR1-DR9.

Les niveaux de gris 70 formés lors de la personnalisation S12 au laser peuvent également être claires si les régions sous-jacentes 70 de la couche support 40 sont transparentes vis-à-vis au moins du spectre de longueur d'onde du visible. Selon un exemple particulier, la couche support 40 est transparente vis-à-vis au moins du spectre d'onde du visible et les perforations 72 révèlent localement au travers de l'arrangement 30 de sous-pixels 32 des régions sous-jacentes 74 claires de la couche support 40 situées en regard des perforations 72 lorsqu'une lumière incidente dans le spectre d'onde du visible est projetée au travers de la couche support 40, les régions sous-jacentes 74 claires formant alors tout ou partie des niveaux de gris 70 en regard des sous-pixels 32.

Dans ce cas, un observateur OB peut visualiser, par transmission d'une lumière projetée depuis la face arrière de la structure lenticulaire 15, les différentes images IG1-IG9 composant l'image 3D IGF en faisant varier sa direction d'observation parmi les M directions d'observation DR1-DR9.

Selon un exemple particulier, la couche support 40 est réactive (ou sensible) vis-à-vis au moins du spectre de longueurs d'onde des UV (ultraviolets), par exemple au moyen d'une impression sur la couche support 40 d'une encre fluorescente réactive aux UV. Ainsi, dans un exemple particulier, la couche support 40 comporte une encre sensible aux UV, de sorte que l'image 3D finale IGF soit visible lorsque la couche support 40 est exposée à des UV., l'encre révélée au travers des perforations 72 formant alors tout ou partie des niveaux de gris 70 en regard des sous-pixels 32.

Plus généralement, quelle que soit la nature de la couche support 40 (opaque, transparente ou fluorescente), les perforations 72 peuvent être agencées de façon à modifier sélectivement la contribution colorimétrique des sous-pixels 32 les uns par rapport aux autres dans l'arrangement 30.

Comme déjà indiqué, l'arrangement 30 de sous-pixels 32 peut être formé par impression sur la couche support 40. En variante, l'arrangement 30 de sous-pixels 32 est formé par effet holographique au moyen d'une couche métallique holographique disposée sur la couche support 40. Dans ce dernier cas, la perforation au laser lors de la personnalisation S12 entraîne une destruction locale de la géométrie de la structure holographique, et plus particulièrement des reliefs et/ou de la couche métallique recouvrant ces reliefs. L'effet holographique est éliminé, ou réduit, dans les régions perforées de la structure holographique, ce qui permet de diminuer (voire éliminer totalement) la contribution relative en couleur des sous-pixels 32 perforés tout en révélant des régions sous-jacentes 74 qui modifie la contribue colorimétrique des sous-pixels dans l'entrelacement de pixels et donc dans l'image 3G finale IGF.

L'invention permet de s'affranchir de la contrainte d'une registration de positionnement précise des lentilles vis-à-vis des sous-pixels, et permet ainsi de produire des images 3D de bonne qualité et de façon fiable dans la mesure où une telle registration n'est pas nécessaire. Les décalages éventuels des sous-pixels vis-à-vis des lentilles sont compensés grâce à l'inspection visuelle qui permet de déterminer les sous-pixels utiles qui sont réellement visualisables au travers des lentilles pour chaque direction d'observation. Les niveaux de gris peuvent ainsi être formés par gravure laser en tenant compte de la position relative réelle des lentilles par rapport aux sous-pixels.

Des images 3D de bonne résolution peuvent ainsi être obtenues, y compris avec des arrangements de sous-pixels de relativement grande taille où les décalages et erreurs de positionnement relatif sont plus difficiles à éviter. Il est en particulier possible de générer des images 3D de façon permanente à partir de la structure lenticulaire de l'invention, et ce indépendamment d'une quelconque alimentation électrique par exemple (contrairement à un écran qui nécessite d'être alimenté électriquement pour afficher une image, les sous-pixels dans l'invention sont formés physiquement de façon permanente sur la couche support).

L'invention permet donc de simplifier le procédé de fabrication des structures lenticulaires à partir desquelles sont formées des images 3D, dans la mesure où il n'est pas nécessaire de maîtriser précisément le positionnement relatif des lentilles ou de vérifier celui-ci aussi précisément pendant la fabrication. De même, cela permet d'éviter la mise au rebus de certaines structures lenticulaire lors de la production ou encore d'éviter la mise en œuvre d'étapes de production correctives pour corriger structurellement ces erreurs de positionnement.

L'invention peut trouver des applications particulières pour la formation d'images 3D de quelconque nature, dans divers contextes, par exemple pour former une image 3D dans un document sécurisé (notamment dans un document identitaire tel qu'une carte d'identité, un passeport, etc.) ou encore pour afficher des images publicitaires dans un espace publique, par exemple dans des panneaux d'affichage.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant, afin de répondre à un besoin bien particulier conformément aux revendications présentées ci-après.

**Revendications**

1. Procédé de formation d'une image 3D (IGF), à partir d'une structure lenticulaire (15) comprenant :

   - une couche support (40) sur laquelle est formé un arrangement (30) de sous-pixels (32) d'au moins deux couleurs distinctes (C1, C2, C3), chaque sous-pixel présentant une unique couleur parmi lesdites au moins deux couleurs distinctes; et
   - un réseau lenticulaire (20) comprenant des lentilles convergentes (22) disposées en regard de l'arrangement de sous-pixels;

   le procédé comprenant :

   a) inspection visuelle (S4) de la structure lenticulaire, au moyen d'un appareil de prise de vue (50), ladite inspection visuelle comprenant les étapes suivantes pour chacune parmi M directions d'observation (DR) distinctes relativement au réseau lenticulaire, M étant un entier au moins égal à 2 :

   a1) positionnement (S6) de l'appareil de prise de vue selon la direction d'observation (DR) ;
   a2) détection (S8) de sous-pixels visualisables au travers des lentilles selon ladite direction d'observation ;

   b) détermination (S10), à partir de la couleur des sous-pixels détectés en a2) pour chaque direction d'observation, de niveaux de gris (70) à générer pour révéler, à partir de l'arrangement (30) de sous-pixels, M images (IGX) visualisables au travers du réseau lenticulaire selon respectivement les M directions d'observation ; et
   c) personnalisation (S12) de l'arrangement (30) de sous-pixels au cours de laquelle les niveaux de gris (70) déterminés en b) sont gravés en regard des sous-pixels dans la couche support par focalisation d'un rayonnement laser (RY1) au travers du réseau lenticulaire de sorte à révéler, à partir de l'arrangement de sous-pixels combiné aux niveaux de gris, les M images (IGX) visualisables au travers du réseau lenticulaire (20) selon respectivement les M directions d'observation, lesdites M images formant collectivement l'image 3D (IGF).

2. Procédé selon la revendication 1, ledit procédé étant mis en œuvre par un système de personnalisation (SY1) comprenant l'appareil de prise de vue et un dispositif laser (60) disposé dans le train optique de l'appareil de prise de vue (50), le dispositif laser projetant le rayonnement laser (RY1) lors de la personnalisation c) selon chaque direction d'observation (DR) adoptée par l'appareil de prise de vue lors du positionnement a1).

3. Procédé selon la revendication 1 ou 2, dans lequel les niveaux de gris (70) gravés lors de la personnalisation c) forment intrinsèquement avec l'arrangement de sous-pixels un entrelacement de pixels d'image (PX) des M images (IGX) visualisables au travers du réseau lenticulaire (20) en variant la direction d'observation parmi les M directions d'observation (DR).

4. Procédé selon l'une quelconque des revendications 1 à 3, dans lequel les M images représentent :

   - différentes vues d'un même objet statique, ces différentes vues étant visualisables dans l'espace selon respectivement les directions d'observation (DR) adoptées au travers du réseau lenticulaire de sorte à produire un effet 3D ; ou
- différentes vues d'un même objet en mouvement, les différentes vues étant visualisables selon les directions d'observation (DR) adoptées au travers du réseau lenticulaire de sorte à produire une animation 3D.

**5.** Procédé selon l'une quelconque des revendications 1 à 4, dans lequel les sous-pixels (32) sont configurés de sorte que leurs couleurs respectives, parmi lesdites au moins deux couleurs distinctes (C1, C2, C3), sont réparties de façon périodique dans l'arrangement (30) de sous-pixels.

**6.** Procédé selon l'une quelconque des revendications 1 à 5, dans lequel l'arrangement (30) de sous-pixels est formé par l'une quelconque des étapes suivantes :

d) impression sur le support ; et
e) formation d'une couche métallique holographique.

**7.** Procédé selon l'une quelconque des revendications 1 à 6, dans lequel les lentilles (22) du réseau lenticulaire (20) sont des lentilles convergentes de type hémisphérique ou asphérique.

**8.** Procédé selon l'une quelconque des revendications 1 à 7, l'arrangement (30) de sous-pixels étant positionné approximativement dans le plan focal des lentilles du réseau lenticulaire.

**9.** Procédé selon l'une quelconque des revendications 1 à 8, dans lequel lors de l'inspection visuelle a), l'appareil de prise de vue (50) opère un déplacement relatif, angulaire et/ou par translation, pour se positionner en a1) selon chacune des M directions d'observation (DR), de sorte à réaliser la détection a2) pour chaque direction d'observation.

**10.** Procédé selon l'une quelconque des revendications 2 à 9, dans lequel le procédé comprenant un enregistrement, dans une mémoire (MR2) du système de personnalisation (SY1), de données d'inspection (DT1) caractérisant les sous-pixels détectés en a2)) au travers du réseau lenticulaire (20) pour chacune des M directions d'observations (DR), ladite détermination b) étant réalisée à partir des données d'inspection et à partir de données d'image (DT2) représentatives des M images formant l'image 3D.

**11.** Procédé selon l'une quelconque des revendications 1 à 10, dans lequel, lors de la personnalisation, des perforations (72) sont réalisées dans l'arrangement

(30) de sous-pixels par ladite focalisation du rayonnement laser (RY1) de sorte à révéler localement au travers de l'arrangement de sous-pixels des niveaux de gris (70) dans les sous-pixels causés par des régions sous-jacentes (74) de la couche support (40) situées en regard des perforations.

**12.** Procédé selon la revendication 11, la couche support (40) étant opaque au moins dans le spectre d'onde du visible,
dans lequel les perforations (72) formées lors de la personnalisation révèlent localement au travers de l'arrangement de sous-pixels des régions sous-jacentes (74) sombres de la couche support situées en regard des perforations, lesdites régions sombres sous-jacentes formant tout ou partie des niveaux de gris en regard des sous-pixels.

**13.** Procédé selon la revendication 11, la couche support (40) comportant une encre sensible aux ultraviolets de sorte que l'image 3D soit visible lorsque ladite couche support est exposée à des ultraviolets, l'encre révélée au travers des perforations formant tout ou partie des niveaux de gris en regard des sous-pixels.

**14.** Procédé selon la revendication 11, la couche support (40) étant transparente vis-à-vis au moins du spectre d'onde du visible, dans lequel les perforations (72) révèlent localement au travers de l'arrangement de sous-pixels des régions sous-jacentes claires de la couche support situées en regard des perforations lorsqu'une lumière incidente dans le spectre d'onde du visible est projetée au travers de la couche support, les régions sous-jacentes claires formant tout ou partie des niveaux de gris en regard des sous-pixels.

**15.** Système de personnalisation (SY1) pour former une image 3D (IGF) à partir d'une structure lenticulaire comprenant :

- une couche support (40) sur lequel est formé un arrangement d'une pluralité de sous-pixels d'au moins deux couleurs différentes, chaque sous-pixel présentant une unique couleur parmi lesdites au moins deux couleurs distinctes; et
- un réseau lenticulaire (20) comprenant des lentilles convergentes disposées en regard de l'arrangement de sous-pixels;

le système de personnalisation comprenant :

- une unité d'inspection (MD2) configuré pour réaliser une inspection visuelle de la structure lenticulaire en visualiser l'arrangement de sous-pixels au travers du réseau lenticulaire au moyen d'un appareil de prise de vue, ladite inspection visuelle comprenant les étapes suivantes pour chacune parmi M direction d'observation (DR) distinctes relativement au réseau lenticulaire, M étant un entier au moins égal à 2 :

a1) positionnement de l'appareil de prise de vue selon la direction d'observation (DR) ;
a2) détection de sous-pixels visualisables au travers des lentilles selon ladite direction d'observation ;

- une unité de calcul (MD4) configurée pour déterminer, à partir de la couleur des sous-pixels détectés en a2) pour chaque direction d'observation, de niveaux de gris à générer pour révéler, à partir de l'arrangement de sous-pixels, M images visualisables au travers du réseau lenticulaire selon respectivement les M directions d'observation ; et
- une unité de personnalisation (MD6) configurée pour personnaliser l'arrangement de sous-pixels en formant des niveaux de gris en regard des sous-pixels dans la couche support par focalisation d'un rayonnement laser au travers des lentilles de sorte à révéler les M images visualisables au travers du réseau lenticulaire selon respectivement les M directions d'observation, lesdites M images formant collectivement l'image 3D.

## Patentansprüche

1. Verfahren zum Bilden eines 3D-Bildes (IGF), ausgehend von einer Linsenstruktur (15), das Folgendes umfasst:

- eine Trägerschicht (40), auf der eine Anordnung (30) von Subpixeln (32) mit mindestens zwei verschiedenen Farben (C1, C2, C3) ausgebildet ist, wobei jedes Subpixel eine einzige Farbe unter den mindestens zwei verschiedenen Farben aufweist; und
- ein Linsennetz (20), das konvergierende Linsen (22) umfasst, die gegenüber der Anordnung von Subpixeln angeordnet sind;

wobei das Verfahren Folgendes umfasst:

a) visuelles Überprüfen (S4) der Linsenstruktur mittels eines Bildaufnahmegeräts (50), wobei das visuelle Überprüfen die folgenden Schritte für jede der M verschiedenen Betrachtungsrichtungen (DR) in Bezug auf das Linsennetz umfasst, wobei M eine Ganzzahl von mindestens 2 ist:

a1) Positionieren (S6) des Bildaufnahmegeräts entsprechend der Betrachtungsrichtung (DR);
a2) Detektieren (S8) von Subpixeln, die durch die Linsen in der Betrachtungsrichtung sichtbar sind;

b) Bestimmen (S10), ausgehend von der Farbe der in a2) detektierten Subpixel für jede Betrachtungsrichtung, von Graustufen (70), die zu erzeugen sind, um aus der Anordnung (30) von Subpixeln M Bilder (IGX) zu offenbaren, die durch das Linsennetz in den jeweiligen M Betrachtungsrichtungen sichtbar sind; und
c) Personalisieren (S12) der Anordnung (30) von Subpixeln, bei dem die in b) bestimmten Graustufen (70) gegenüber den Subpixeln in die Trägerschicht durch Fokussierung einer Laserstrahlung (RY1) durch das Linsennetz hindurch graviert wird, so dass aus der Anordnung von Subpixeln kombiniert mit den Graustufen die M Bilder (IGX), die durch das Linsennetz (20) in den jeweiligen M Betrachtungsrichtungen sichtbar sind, offenbart werden, wobei die M Bilder gemeinsam das 3D-Bild (IGF) bilden.

2. Verfahren nach Anspruch 1, wobei das Verfahren durch ein Personalisierungssystem (SY1) implementiert wird, das das Bildaufnahmegerät und eine Laservorrichtung (60) umfasst, die im optischen Zug des Bildaufnahmegeräts (50) angeordnet ist, wobei die Laservorrichtung die Laserstrahlung (RY1) beim Personalisieren c) in jeder Betrachtungsrichtung (DR) projiziert, die das Bildaufnahmegerät beim Positionieren a1) einnimmt.

3. Verfahren nach Anspruch 1 oder 2, wobei die beim Personalisieren c) gravierten Graustufen (70) inhärent mit der Anordnung von Subpixeln eine Verflechtung von Bildpixeln (PX) der M Bilder (IGX) bilden, die durch das Linsennetz (20) hindurch sichtbar sind, indem die Betrachtungsrichtung unter den M Betrachtungsrichtungen (DR) variiert wird.

4. Verfahren nach einem der Ansprüche 1 bis 3, wobei die M Bilder Folgendes repräsentieren:

- verschiedene Ansichten desselben statischen Objekts, wobei diese verschiedenen Ansichten im Raum entsprechend den durch das Linsennetz eingenommenen Betrachtungsrichtungen (DR) sichtbar sind, um einen 3D-Effekt zu erzeugen; oder
- verschiedene Ansichten desselben sich bewegenden Objekts, wobei die verschiedenen Ansichten je nach den durch das Linsennetz eingenommenen Betrachtungsrichtungen (DR) sichtbar sind, um eine 3D-Animation zu erzeugen.

**5.** Verfahren nach einem der Ansprüche 1 bis 4, wobei die Subpixel (32) so eingerichtet sind, dass ihre jeweiligen Farben, unter den mindestens zwei verschiedenen Farben (C1, C2, C3), periodisch in der Anordnung (30) von Subpixeln verteilt sind.

**6.** Verfahren nach einem der Ansprüche 1 bis 5, wobei die Anordnung (30) von Subpixeln durch einen der folgenden Schritte gebildet wird:

    d) Drucken auf dem Träger; und
    e) Bilden einer holografischen Metallschicht.

**7.** Verfahren nach einem der Ansprüche 1 bis 6, wobei die Linsen (22) des Linsennetzes (20) konvergierende Linsen des halbsphärischen oder asphärischen Typs sind.

**8.** Verfahren nach einem der Ansprüche 1 bis 7, wobei die Anordnung (30) von Subpixeln ungefähr in der Fokusebene der Linsen des Linsennetzes positioniert ist.

**9.** Verfahren nach einem der Ansprüche 1 bis 8, wobei beim visuellen Überprüfen a) das Bildaufnahmegerät (50) eine relative, Winkel- und/oder translatorische Verschiebung durchführt, um sich in a1) in jeder der M Betrachtungsrichtungen (DR) zu positionieren, so dass das Detektieren a2) für jede Betrachtungsrichtung erfolgt.

**10.** Verfahren nach einem der Ansprüche 2 bis 9, wobei das Verfahren ein Speichern von Prüfungsdaten (DT1), die die in a2)) detektierten Subpixel durch das Linsennetz (20) hindurch für jede der M Betrachtungsrichtungen (DR) charakterisieren, in einem Speicher (MR2) des Personalisierungssystems (SY1) umfasst, wobei das Bestimmen b) ausgehend von den Prüfungsdaten und ausgehend von den Bilddaten (DT2) durchgeführt wird, die repräsentativ für die M Bilder sind, die das 3D-Bild bilden.

**11.** Verfahren nach einem der Ansprüche 1 bis 10, wobei beim Personalisieren durch die Fokussierung der Laserstrahlung (RY1) Perforationen (72) in der Anordnung (30) von Subpixeln hergestellt werden, so dass lokal durch die Anordnung von Subpixeln hindurch Graustufen (70) in den Subpixeln offenbart werden, die durch darunterliegende Bereiche (74) der Trägerschicht (40) verursacht werden, die sich gegenüber den Perforationen befinden.

**12.** Verfahren nach Anspruch 11, wobei die Trägerschicht (40) mindestens im sichtbaren Wellenspektrum opak ist, wobei die beim Personalisieren gebildeten Perforationen (72) lokal durch die Anordnung von Subpixeln dunkle darunterliegende Bereiche (74) der Trägerschicht offenbaren, die sich gegenüber den Perforationen befinden, wobei die dunklen darunterliegenden Bereiche ganz oder teilweise die Graustufen gegenüber den Subpixeln bilden.

**13.** Verfahren nach Anspruch 11, wobei die Trägerschicht (40) eine ultraviolettempfindliche Tinte umfasst, so dass das 3D-Bild sichtbar ist, wenn die Trägerschicht Ultraviolettlicht ausgesetzt wird, wobei die durch die Perforationen hindurch offenbarte Tinte ganz oder teilweise die Graustufen gegenüber den Subpixeln bildet.

**14.** Verfahren nach Anspruch 11, wobei die Trägerschicht (40) gegenüber mindestens dem sichtbaren Wellenspektrum transparent ist, wobei die Perforationen (72) lokal durch die Anordnung von Subpixeln hindurch helle darunterliegende Bereiche der Trägerschicht offenbaren, die sich gegenüber den Perforationen befinden, wenn ein in das sichtbare Wellenspektrum einfallendes Licht durch die Trägerschicht projiziert wird, wobei die hellen darunterliegenden Bereiche die Graustufen ganz oder teilweise gegenüber den Subpixeln bilden.

**15.** Personalisierungssystem (SY1) zum Bilden eines 3D-Bildes (IGF) ausgehend von einer Linsenstruktur, das Folgendes umfasst:

    - eine Trägerschicht (40), auf der eine Anordnung aus einer Vielzahl von Subpixeln mit mindestens zwei verschiedenen Farben ausgebildet ist, wobei jedes Subpixel eine einzige Farbe unter den mindestens zwei verschiedenen Farben umfasst; und
    - ein Linsennetz (20), das konvergierende Linsen umfasst, die gegenüber der Anordnung von Subpixeln angeordnet sind:
    wobei das Personalisierungssystem Folgendes umfasst:

        - eine Prüfungseinheit (MD2), die so eingerichtet ist, dass sie ein visuelles Überprüfen der Linsenstruktur durchführt, indem sie die Anordnung von Subpixeln durch das Linsennetz hindurch mittels eines Bildaufnahmegeräts sichtbar macht, wobei das visuelle Überprüfen die folgenden Schritte für jede der M verschiedenen Betrachtungsrichtungen (DR) in Bezug auf das Linsennetz umfasst, wobei M eine Ganzzahl von mindestens 2 ist:

            a1) Positionieren des Bildaufnahmegeräts in der Betrachtungsrichtung (DR);
            a2) Detektieren von Subpixlen, die durch die Linsen in der Betrachtungsrichtung sichtbar sind;

- eine Recheneinheit (MD4), die so eingerichtet ist, dass sie aus der Farbe der in a2) für jede Betrachtungsrichtung detektierten Subpixel Graustufen bestimmt, die erzeugt werden sollen, um aus der Anordnung von Subpixel M Bilder zu offenbaren, die durch das Linsennetz in den jeweiligen M Betrachtungsrichtungen sichtbar sind; und
- eine Personalisierungseinheit (MD6), die so eingerichtet ist, dass sie die Anordnung von Subpixeln personalisiert, indem sie Graustufen gegenüber den Subpixeln in der Trägerschicht durch Fokussierung einer Laserstrahlung durch die Linsen bildet, so dass die M Bilder, die durch das Linsennetz in den jeweiligen M Betrachtungsrichtungen sichtbar sind, offenbart werden, wobei die M Bilder gemeinsam das 3D-Bild bilden.

**Claims**

1. Method for forming a 3D image (IGF), from a lenticular structure (15) comprising:

   - a support layer (40) on which an arrangement (30) of subpixels (32) of at least two distinct colours (C1, C2, C3) is formed, each subpixel having a single colour among said at least two distinct colours; and
   - a lenticular array (20) comprising convergent lenses (22) arranged opposite the subpixel arrangement;

   the method comprising:

   a) visual inspection (S4) of the lenticular structure, by means of a camera (50), said visual inspection comprising the following steps for each of M distinct directions of observation (DR) relative to the lenticular array, M being an integer equal to at least 2:

   a1) positioning (S6) the camera according to the direction of observation (DR);
   a2) detecting (S8) subpixels that can be viewed through the lenses according to said direction of observation;

   b) determining (S10), from the colour of the subpixels detected in a2) for each direction of observation, grey levels (70) to be generated to reveal, from the arrangement (30) of subpixels, M images (IGX) viewable through the lenticular array according to the M directions of observation respectively; and

   c) personalising (S12) the arrangement (30) of subpixels during which the grey levels (70) determined in b) are etched opposite the subpixels in the support layer by focusing a laser radiation (RY1) through the lenticular array so as to reveal, from the subpixel arrangement combined with the grey levels, the M images (IGX) viewable through the lenticular array (20) according to the M observation directions respectively, said M images collectively forming the 3D image (IGF).

2. Method according to claim 1, said method being implemented by a personalisation system (SY1) comprising the camera and a laser device (60) disposed in the optical train of the camera (50), the laser device projecting the laser radiation (RY1) during the personalisation c) according to each direction of observation (DR) adopted by the camera during positioning a1).

3. Method according to claim 1 or 2, wherein the grey levels (70) etched during customization c) intrinsically form with the sub-pixel arrangement an interlacing of image pixels (PX) of the M images (IGX) viewable through the lenticular array (20) by varying the direction of observation among the M directions of observation (DR).

4. Method according to any one of claims 1 to 3, wherein the M images represent:

   - different views of the same static object, these different views being viewable in space according respectively to the directions of observation (DR) adopted through the lenticular array so as to produce a 3D effect; or
   - different views of the same moving object, the different views being viewable according to the directions of observation (DR) adopted through the lenticular array so as to produce a 3D animation.

5. Method according to any one of claims 1 to 4, wherein the subpixels (32) are configured so that their respective colours, among said at least two distinct colours (C1, C2, C3), are periodically distributed in the subpixel arrangement (30).

6. Method according to any one of claims 1 to 5, wherein the subpixel arrangement (30) is formed by any one of the following steps:

   d) printing on the support; and
   e) forming a holographic metallic layer.

7. Method according to any one of claims 1 to 6, wherein the lenses (22) of the lenticular array (20) are convergent lenses of the hemispherical or aspherical type.

8. Method according to any one of claims 1 to 7, the subpixel arrangement (30) being positioned approximately in the focal plane of the lenses of the lenticular array.

9. Method according to any one of claims 1 to 8, wherein during the visual inspection a), the camera (50) makes a relative movement, angular and/or by translation, to position itself in a1) according to each of the M observation directions (DR), so as to perform detection a2) for each observation direction.

10. Method according to any one of claims 2 to 9, wherein the method comprising recording, in a memory (MR2) of the personalisation system (SY1), inspection data (DT1) characterising the subpixels detected in a2)) through the lenticular array (20) for each of the M observation directions (DR),
said determination b) being performed from the inspection data and from image data (DT2) representative of the M images forming the 3D image.

11. Method according to any one of claims 1 to 10, wherein, during personalisation, perforations (72) are made in the subpixel arrangement (30) by said focusing of the laser radiation (RY1) so as to locally reveal through the subpixel arrangement the grey levels (70) in the subpixels caused by underlying regions (74) of the support layer (40) located opposite the perforations.

12. Method according to claim 11, the support layer (40) being opaque at least in the visible wave spectrum, wherein the perforations (72) formed during personalisation locally reveal through the subpixel arrangement the underlying dark regions (74) of the support layer located opposite the perforations, said underlying dark regions forming all or part of the grey levels opposite the sub-pixels.

13. Method according to claim 11, the carrier layer (40) including an ultraviolet-sensitive ink so that the 3D image is visible when said support layer is exposed to ultraviolets, the ink revealed through perforations forming all or part of the grey levels facing the subpixels.

14. Method according to claim 11, the support layer (40) being transparent with respect to at least the visible wave spectrum, wherein the perforations (72) locally reveal through the subpixel arrangement the light underlying regions of the support layer located opposite the perforations when an incident light in the visible wave spectrum is projected through the support layer, the light underlying regions forming all or part of the grey levels opposite the sub-pixels.

15. Personalisation system (SY1) to form a 3D image (IGF) from a lenticular structure comprising:

   - a support layer (40) on which an arrangement of a plurality of subpixels of at least two different colours is formed, each subpixel having a single colour among said at least two distinct colours; and
   - a lenticular array (20) comprising convergent lenses arranged opposite the subpixel arrangement:

the personalisation system comprising:

   - an inspection unit (MD2) configured to perform a visual inspection of the lenticular structure by viewing the subpixel arrangement through the lenticular array by means of a camera, said visual inspection comprising the following steps for each of M distinct directions of observation (DR) relative to the lenticular network, M being an integer equal to at least 2:

      a1) positioning of the camera according to the direction of observation (DR);
      a2) detecting subpixels that can be viewed through the lenses according to said observation direction;

   - a computing unit (MD4) configured to determine, from the colour of the subpixels detected in a2) for each observation direction, grey levels to be generated to reveal, from the subpixel arrangement, M images viewable through the lenticular array according to the M observation directions respectively; and
   - a personalisation unit (MD6) configured to personalise the arrangement of subpixels by forming grey levels opposite the subpixels in the support layer by focusing a laser radiation through the lenses so as to reveal the M images viewable through the lenticular array according to the M observation directions respectively, said M images collectively forming the 3D image.

[Fig. 1]

[Fig. 2]

[Fig. 3]

[Fig. 4]

MODULE D'INSPECTION —— MD2

MODULE DE CALCUL —— MD4

MODULE DE PERSONNALISATION —— MD6

DV1

| 62 | 64 | PG1 | —— MR1

| DT1 | DT2 | —— MR2

SY1

50

60

64

65

RY1

DR

[Fig. 5]

S2 — FOURNITURE D'UNE STRUCTURE LENTICULAIRE

S4 — INSPECTION VISUELLE

S6 — POSITIONNEMENT DE L'APPAREIL DE PRISE DE VUE SELON LA DIRECTION D'OBSERVATION DR

S8 — DÉTECTION DE SOUS-PIXELS VISUALISABLES SELON LA DIRECTION D'OBSERVATION DR

S10 — DÉTERMINATION DES NIVEAUX DE GRIS À GÉNÉRER

S12 — PERSONNALISATION DE L'ARRANGEMENT DE SOUS-PIXELS POUR RÉVÉLER LES IMAGES IGX (IG1-IG9) FORMANT L'IMAGE 3D

[Fig. 6]

[Fig. 7]

[Fig. 8]

[Fig. 9]

[Fig. 10]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2580065 B1
- EP 2681053 B1
- WO 2016097608 A1
- US 2019283482 A1
- DE 202008007564 U1
- EP 2567270 B1